# EUROPÄISCHE PATENTSCHRIFT

(11) **EP 2 616 264 B1**
(45) Veröffentlichungstag und Bekanntmachung des Hinweises auf die Patenterteilung: **25.06.2014**
(21) Anmeldenummer: 11738736.5
(22) Anmeldetag: 03.08.2011
(51) Int. Cl.: B60K 17/344, B60K 17/346

(54) **VERTEILERGETRIEBE**
TRANSFER GEAR
ENGRENAGE DISTRIBUTEUR

(30) Priorität: 16.09.2010 DE 102010040883
(43) Veröffentlichungstag der Anmeldung: 24.07.2013
(73) Patentinhaber: ZF Friedrichshafen AG, 88038 Friedrichshafen (DE)
(72) Erfinder: SOLKA, Ulrich, 94081 Fürstenzell (DE)
(86) Internationale Anmeldenummer: PCT/EP2011/063337
(87) Internationale Veröffentlichungsnummer: WO 2012/034782

(56) Entgegenhaltungen:
- US-A- 3 470 766
- US-A- 4 292 860
- US-A- 4 605 084

## Beschreibung

Die Erfindung betrifft ein Verteilergetriebe für einen Antrieb einer ständig angetriebenen ersten Radachse und zumindest einer weiteren zuschaltbaren Radachse eines Kraftfahrzeuges mit einer von einem Schaltgetriebe antreibbaren Eingangswelle und einer gleichachsig zu dieser verlaufenden ersten Ausgangswelle, die zum Antrieb der ständig angetriebenen Radachse dient, mit einer im Vorgelege zu der Eingangswelle und der ersten Ausgangswelle angeordneten Zwischenwelle und mit einer von der Zwischenwelle über ein Räderpaar angetriebenen zweiten Ausgangswelle, die zum Antrieb der weiteren zuschaltbaren Radachse dient, wobei die erste Ausgangswelle über eine erste Schaltkupplung wahlweise mit einer Direktübertragung oder einer Untersetzung antreibbar ist.

Kraftfahrzeuge werden zur Verbesserung ihres Traktionsverhaltens und im Rahmen der Erhöhung des maximal übertragbaren Drehmoments mit mehrachsigen Antrieben versehen. Insbesondere bei geländegängigen Nutzkraftfahrzeugen, Trac-Fahrzeugen und Baumaschinen kommen Antriebskonzepte mit mehreren angetriebenen Radachsen zum Einsatz, bei denen über ein separates oder am Schaltgetriebegehäuse angeflanschtes Verteilergetriebe sämtliche Radachsen permanent oder zum Teil selektiv zu- oder abschaltbar angetrieben werden. Für die Hersteller von Nutzkraftfahrzeugen, die entsprechende Fahrzeugtypen sowohl mit einem Allradantrieb als auch mit Hinterachsantrieb ausrüsten, ist von großer Bedeutung, dass in beiden Fällen die gesamte Gestaltung des Nutzkraftfahrzeugs im Wesentlichen identisch ist. Ein Ziel ist es dabei, eine niedrige Position der Fahrerkabine des Nutzkraftfahrzeugs auch dann beizubehalten, wenn dieses mit einem Allradantrieb ausgerüstet wird. Ein starker Versatz zwischen einem Abtriebsflansch des Verteilergetriebes und einem Eintrieb zur Hinterachse, der zu einem großen Beugungswinkel an der entsprechenden Gelenkwelle führen würde, kann dadurch vermieden werden, dass die mit dem Schaltgetriebe verbundene Eingangswelle gleichachsig zu der für den Hinterachsantrieb dienenden Ausgangswelle angeordnet ist. Eine zum Eintrieb in die Vorderachse führende Gelenkwelle wird dabei seitlich am Schaltgetriebe und am Verbrennungsmotor vorbeigeführt.

Ein Verteilergetriebe der oben angegebenen Gattung, das die vorgenannten Voraussetzungen für den Antrieb zweier Radachsen erfüllt, ist aus der DE 22 52 050 B2 bekannt. Dieses Verteilergetriebe mit einer gleichachsigen Anordnung von Eingangswelle und erster Ausgangswelle weist, abgesehen von einem Wellenzug für einen beidseitig des Verteilergetriebes abgehenden Nebenabtrieb, für die Schaltung in seinen Leerlauf oder in zwei Antriebsstufen vier weitere Wellenzüge auf. Die Antriebsstufen können eine Direktübertragung oder Übersetzung und eine Untersetzung aufweisen. Dabei ist innerhalb des Wellenzuges, der die Eingangswelle und die erste Ausgangswelle beinhaltet, ein separater ein Zwischenrad aufnehmender Wellenabschnitt eingefügt, wobei dieses Zwischenrad mit einem auf der einen Zwischenwelle frei drehbaren und mit dieser kuppelbaren Zahnrad und mit einem Tellerrad eines Differenzialgetriebes kämmt. Es handelt sich um ein Verteilergetriebe, das beide Radachsen, also die Hinterachse und die Vorderachse permanent antreibt, denn eine Abschaltung des Antriebes der Vorderachse ist nicht vorgesehen.

Die US-A-4 292 860, gemäß dem Oberbegriff des Anspruchs 1, offenbart ein Verteilergetriebe für einen Antrieb einer ständig angetriebenen ersten Radachse und einer weiteren zuschaltbaren Radachse mit einer von einem Schaltgetriebe antreibbaren Eingangswelle und einer gleichachsig zu dieser verlaufenden ersten Ausgangswelle, die zum Antrieb der ständig angetriebenen Radachse dient. Ein Drehzahlausgleich zwischen den Abtriebswellen im Sinne eines Differentials ist nicht vorgesehen.

Die US-A-4 605 084, gemäß dem Oberbegriff des Anspruchs 2, offenbart ein Verteilergetriebe mit einer ständig angetriebenen ersten Radachse mit einer weiteren zuschaltbaren Radachse mit einer von einem Schaltgetriebe antreibbaren Eingangswelle und einer gleichachsig zu dieser verlaufenden ersten Ausgangswelle und mit einer zweiten Ausgangswelle zum Antrieb einer weiteren zuschaltbaren Radachse, wobei eine Differenzdrehzahl zwischen der ersten und zweiten Ausgangswelle nicht vorgesehen ist.

Die US-A-3 470 766 offenbart ein Getriebe mit einer ersten und zweiten Abtriebswelle, wobei ein Differentialgetriebe koaxial zur Abtriebswelle angeordnet ist.

Es ist Aufgabe der vorliegenden Erfindung, ein Verteilergetriebe der Vorgenannten Art derart weiterzubilden, dass trotz Verringerung der erforderlichen Bauteile eine Zu- oder Abschaltung des Antriebes einer zuschaltbaren Radachse und eine Bereichsgruppenschaltung ermöglicht wird. Dabei sollen auch die baulichen Abmessungen des Verteilergetriebes verringert werden, so dass es sich problemlos innerhalb des durch den Fahrzeugrahmen begrenzten Bauraumes unterbringen lässt.

Diese Aufgabe wird, ausgehend von den Merkmalen der Oberbegriffe der unabhängigen Patentansprüche 1 und 2, in Verbindung mit deren kennzeichnenden Merkmalen gelöst. Die darauf folgenden abhängigen Patentansprüche geben jeweils vorteilhafte Weiterbildungen der erfindungsgemäßen Lehre wieder.

Gemäß dem kennzeichnenden Teil des Patentanspruchs 1 soll die erste Schaltkupplung unmittelbar auf der Eingangswelle angeordnet sein und in einer ersten Schaltstellung zur Direktübertragung die Eingangswelle direkt mit der ersten Ausgangswelle oder einem auf dieser angeordneten ersten Abtriebsrad verbinden und es soll die erste Schaltkupplung in einer zweiten Schaltstellung ein auf der Eingangswelle frei drehbar gelagertes erstes Antriebsrad mit dieser kuppeln und die erste Ausgangswelle über das auf der Zwischenwelle ausgebildete Vorgelege antreiben, wodurch die erste Ausgangswelle mit untersetzter Drehzahl angetrieben wird. Diese Anordnung der Wellen und der ersten Schaltkupplung führt insgesamt zu einer deutlichen Reduzierung der erforderlichen Bauteile und der äußeren ,Abmessungen des Verteilergetriebes. Die erste Schaltkupplung kann dabei zwei unterschiedliche Schaltstellungen einnehmen, wobei sie für einen direkten Durchtrieb die Eingangswelle mit der ersten Ausgangswelle verbindet oder zur Untersetzung der Drehzahl der ersten Ausgangswelle gegenüber der Drehzahl der Eingangswelle das erste Antriebsrad mit der Eingangswelle kuppelt, so dass die erste Ausgangswelle in diesem Geländegang über das Vorgelege angetrieben wird. Durch die Schaffung eines direkten Durchtriebs lässt sich die Höhe des Verteilergetriebes, bezogen auf die Lage der Eingangswelle reduzieren, so dass der Raum für die Anordnung einer Fahrerkabine bei Nutzkraftfahrzeugen nicht eingeschränkt wird, d.h., die Kabine eine vergleichsweise niedrige Position einnehmen kann. Das Verteilergetriebe muss so ausgeführt sein, dass die durchgängige Gelenkwelle zwischen Getriebe und Achse bei einem Standard 4x2 LKW beibehalten werden kann. Indem das Verteilergetriebe keinen Versatz von der Eingangswelle zur Ausgangswelle hat, hat die Motor-Getriebeeinheit wenig Versatz zur Hinterachse, wodurch die Fahrzeugkabine niedrig bleiben kann. An Stelle einer ersten Schaltkupplung, die wechselweise beide Funktionen übernimmt, können auch zwei getrennt voneinander angeordnete Schaltkupplungen vorgesehen sein, eine für den direkten Durchtrieb und eine zum Festlegen des ersten Zahnrades auf der Zwischenwelle oder an einem Glied eines Differenzialgetriebes. Diese getrennt angeordneten Schaltkupplungen können gegenläufige Betätigungsrichtungen für ihren Einrückvorgang aufweisen, so dass sie mittels einer Schaltstange wechselweise betätigbar sind.

Alternativ dazu soll gemäß dem unabhängigen Patentanspruch 2 die erste Schaltkupplung unmittelbar auf der Eingangswelle angeordnet sein und in einer eingekuppelten Schaltstellung zur Direktübertragung die Eingangswelle direkt mit der ersten Ausgangswelle verbinden. Das entspricht der ersten Bereichsgruppe, in welcher das Fahrzeug in einer Straßengruppe angetrieben wird. Weiterhin soll ein erstes drehfest mit der Eingangswelle verbundenes Antriebsrad mit einem ersten Zahnrad im Eingriff sein, welches in einer zweiten Bereichsgruppe, die einer Geländegruppe entspricht, und im Fall, dass es kein Differenzial gibt, über eine dritte Schaltkupplung an die Zwischenwelle oder an ein Glied eines Differenzialgetriebes kuppelbar ist, wobei die erste Ausgangswelle über das auf der Zwischenwelle ausgebildete Vorgelege mit untersetzter Drehzahl angetrieben wird. Eine Direktübertragung bedeutet, dass die erste Ausgangswelle von der Eingangswelle 1 : 1 angetrieben wird. Gemäß dieser zweiten Lösung ist die erste Schaltkupplung also nicht als Doppelkupplung ausgebildet, denn stattdessen sind zwischen der Eingangswelle und der ersten Ausgangswelle sowie zwischen dem ersten Zahnrad und der Zwischenwelle bzw. einem Glied des Differenzialgetriebes Einfachkupplungen vorgesehen.

Demgegenüber ist bei dem Verteilergetriebe nach der DE 22 52 050 B2 der Bauaufwand dadurch wesentlich erhöht, dass kein direkter Durchtrieb von der Eingangswelle zur ersten Ausgangswelle erfolgt. Vielmehr treibt die Eingangswelle je nach der Schaltstellung einer zur Baugruppe B gehörenden Schaltkupplung eine erste Zwischenwelle mit Übersetzung oder Untersetzung an. Von dieser ersten Zwischenwelle aus wird ein auf einer zweiten Zwischenwelle angeordnetes Differenzialgetriebe über eine weitere Schaltkupplung und ein Zwischenrad angetrieben. Eine Ausgangswelle des Differenzialgetriebes treibt dann über ein weiteres Zahnradpaar die zur Hinterachse führende Ausgangswelle an. Neben dem gegenüber der erfindungsgemäßen Lösung erheblich höheren Bauaufwand sind durch die Verwendung von vier Wellenzügen die äußeren Abmessungen des Verteilergetriebes deutlich vergrößert.

Von besonderem Vorteil ist eine Ausbildung des erfindungsgemäßen Verteilergetriebes, bei der ein verlängerter Abschnitt der Zwischenwelle ein zweites auf dieser frei drehbares Antriebsrad aufnimmt, das mit einem auf der zweiten Ausgangswelle angeordneten zweiten Abtriebsrad im Eingriff ist und mit dem verlängerten Abschnitt mittels einer zweiten Schaltkupplung verbindbar ist. Mittels dieser zweiten Schaltkupplung erfolgt die selektive Zu- oder Abschaltung des Antriebes einer Vorderachse.

Alternativ dazu kann gleichachsig zur Zwischenwelle ein drehfest mit einem zweiten Antriebsrad verbundener Wellenstummel angeordnet sein, der drehbar in der Zwischenwelle gelagert ist, wobei das Antriebsrad mit einem auf einer zweiten Ausgangswelle angeordneten zweiten Abtriebsrad im Eingriff ist und der Wellenstummel über eine zweite Schaltkupplung mit der Zwischenwelle kuppelbar ist. Natürlich besteht auch die Möglichkeit, die zweite Schaltkupplung auf der zweiten Ausgangswelle anzuordnen, um das zweite Abtriebsrad selektiv mit dieser zu verbinden. Weiterhin kann die zweite Schaltkupplung kombiniert sein oder ersetzt sein mit bzw. durch ein reib- oder formschlüssiges Element, das das auf die Vorderachse übertragbare Drehmoment begrenzt.

In weiterer Ausgestaltung der Erfindung soll innerhalb der Zwischenwelle ein Differenzialgetriebe angeordnet sein, dessen Glieder sowohl mit einem ersten und einem zweiten Zahnrad als auch mit einem zweiten Antriebsrad verbunden sind, wobei das zweite Antriebsrad mit einem auf der zweiten Ausgangswelle angeordneten zweiten Abtriebsrad im Eingriff ist. Das Differenzialgetriebe übernimmt folglich im Geländegang die Funktion eines Längsdifferenzials, indem ein Planetensatz im schlupffreien Betrieb des Fahrzeugs vollständig oder nahezu vollständig im Block umläuft. Hierzu sind die Übersetzungen der Räderketten so gewählt, dass unter Berücksichtigung der Reifenumfänge im schlupffreien Betrieb am Differenzialgetriebe keine Drehzahldifferenzen, also keine Ausgleichsbewegungen auftreten. Auf Grund der erfindungsgemäßen Wellen- und Räderanordnungen ist es mit einfachen Mitteln möglich, die jeweils erforderliche Vorderachsübersetzung an die im Allradbetrieb vorgesehene Hinterachsübersetzung anzupassen. Dazu muss in entsprechender Weise die Zähnezahl des zweiten Antriebsrades und des zweiten Abtriebsrades verändert werden.

Außerdem besteht im Rahmen der Erfindung die Möglichkeit, das Differenzialgetriebe als Stirnradplanetentrieb auszubilden, der räumlich zwischen dem ersten und dem zweiten Zahnrad angeordnet ist. Der Stirnradplanetentrieb weist nur geringe axiale Abmessungen auf, die im Wesentlichen denen der ersten Schaltkupplung entsprechen. Dadurch ergibt sich eine äußerst kompakte Anordnung und somit eine Verringerung der axialen Baulänge des Verteilergetriebes. Dabei ist von Vorteil, wenn von den Gliedern des Stirnradplanetentriebes ein Steg mit dem ersten Zahnrad, ein Hohlrad mit dem zweiten Zahnrad und ein Sonnenrad mit dem zweiten Antriebsrad verbunden sind.

In Weiterbildung der Erfindung soll zwischen dem Steg und dem Sonnenrad eine zur Sperrung des Differenzialgetriebes dienende Sperrkupplung angeordnet sein, die bei einer Direktübertragung von der Eingangswelle zur ersten Ausgangswelle das von dem ersten Antriebsrad angetriebene erste Zahnrad mit dem zweiten Antriebsrad kuppelt. Im Geländegang, in welchem beide Radachsen mit einer Untersetzung angetrieben werden, kann folglich in extremen Schlupfzuständen, die vorzugsweise an einer der beiden Radachsen auftreten, das Differenzialgetriebe mittels der Sperrkupplung gesperrt werden. Diese Sperrkupplung ist bei der Ausbildung des Verteilergetriebes mit Längsdifferenzial in dem Bereich angeordnet, in dem in der zuvor erläuterten Version ohne Längsdifferenzial die zweite Schaltkupplung vorgesehen sein soll. Dadurch besteht die Möglichkeit, das Verteilergetriebe entsprechend den Anforderungen wie in einem Baukastensystem unter Beibehaltung der Gehäuseausbildung und aller wesentlichen Antriebskomponenten zu variieren und somit an die Anforderungen anzupassen. Weiterhin kann die Sperrkupplung kombiniert sein oder ersetzt sein durch ein reib- oder formschlüssiges Element, das das auf die Vorderachse übertragbare Drehmoment begrenzt.

Dabei kann es insbesondere dann, wenn das Nutzkraftfahrzeug mit einer Nebenabtriebswelle zum Antrieb separater Geräte versehen sein soll, von Vorteil sein, diese mit dem Steg zu verbinden und sie dabei durch das zweite Zahnrad hindurchzuführen. Der Steg ist folglich einerseits mit dem ersten Zahnrad und andererseits mit der zum Nebenabtrieb führenden Welle verbunden. Dabei kann die Nebenabtriebswelle bei festgebremstem Hohlrad ein Drehmoment übertragen, wobei das erste Zahnrad und das zweite Antriebsrad vom Sonnenrad entkuppelt sind. Zur Festlegung bzw. zum Abbremsen des Hohlrades wird die Hinterachse durch eine Parksperre oder Feststellbremse kraft- oder formschlüssig arretiert. Alternativ dazu kann die erste Schaltkupplung derart ausgebildet sein, dass sie nur zum Ein- oder Auskuppeln des direkten Durchtriebs zur ersten Ausgangswelle dient, während zwischen dem Steg und dem ersten Zahnrad eine weitere Schaltkupplung angeordnet ist. Dabei kann das erste Zahnrad mit einem auf einer Nebenabtriebswelle angeordneten Abtriebsrad im Eingriff sein. Folglich wird die Nebenabtriebswelle in der geschalteten Geländegruppe, also im Allradbetrieb, angetrieben. Das ist der Fall, wenn das Fahrzeug abgeschleppt wird. In beiden Versionen für den Antrieb der Nebenabtriebswelle steht diese mit dem Steg des Differenzialgetriebes in Verbindung. Der Steg wird aber beim Abschleppen des Fahrzeugs als Summierungswelle aus Sonnenrad und Hohlrad von der Vorderachse und der Hinterachse aus angetrieben. Alternativ zu diesen beiden Versionen könnte auch die Drehzahl des Hohlrades auf die Nebenabtriebswelle übertragen werden.

Sowohl die Schaltkupplungen als auch die Sperrkupplung sollen bevorzugt als Klauenkupplungen ausgebildet sein. Die entsprechenden Klauenkupplungen können, sofern erforderlich, mit einer Synchronisation versehen sein. Darüber hinaus besteht aber auch die Möglichkeit, eine oder sämtliche Kupplungen mit reibschlüssigen Mitnehmern zu versehen.

Schließlich wird in weiterer Ausgestaltung der Erfindung vorgeschlagen, die zweite Ausgangswelle in einem gegenüber einem Verteilergetriebegehäuse separaten Gehäuse anzuordnen, wobei das Gehäuse um eine Längsmittelachse der Zwischenwelle schwenkbar und in unterschiedlichen Positionen am Verteilergetriebegehäuse festlegbar sein soll. Dadurch kann ein Antriebsflansch der zweiten Ausgangswelle gemeinsam mit dem Gehäuse in eine Position geschwenkt werden, in welcher die mit diesem verbundene Gelenkwelle bezogen auf die Lage des Schaltgetriebes, eines Kurbelgehäuses bzw. einer Ölwanne des Verbrennungsmotors sowie eines Eintriebs in ein Vorderachsgetriebe eine optimale Lage einnimmt und mit möglichst geringem Beugungswinkel angetrieben wird.

Die Erfindung ist nicht auf die angegebene Kombination der Merkmale der unabhängigen Ansprüche und der abhängigen Ansprüche beschränkt. Es ergeben sich darüber hinaus Möglichkeiten, einzelne Merkmale, auch soweit sie aus den Ansprüchen, der nachfolgenden Beschreibung der Ausführungsbeispiele oder unmittelbar aus der Zeichnung hervorgehen, miteinander zu kombinieren. Die Bezugnahme der Ansprüche auf die Zeichnung durch die Verwendung von Bezugszeichen soll den Schutzumfang der Ansprüche nicht beschränken.

Weitere, die Erfindung verbessernde Maßnahmen werden nachstehend gemeinsam mit der Beschreibung vorteilhafter Ausführungsformen der Erfindung näher dargestellt. Es zeigen:
- Fig. 1: eine schematische Darstellung einer Ausführungsform eines Verteilergetriebes, welches nicht vom Schutzumfang mit umfasst ist.
- Fig. 2: eine schematische Darstellung einer zweiten Ausführungsform, die bezüglich der Wellenanordnung einem Schnitt gemäß Linie II - II in Fig. 3 entspricht,
- Fig. 3: eine Ansicht auf eine Stirnseite eines Verteilergetriebes mit einem schwenkbaren, eine zweite Ausgangswelle aufnehmenden Gehäuse,
- Fig. 4: eine schematische Darstellung einer dritten Ausführungsform eines Verteilergetriebes mit einer ersten Antriebsart einer Nebenabtriebswelle und
- Fig. 5: eine schematische Darstellung einer zweiten Antriebsart einer Nebenabtriebswelle.

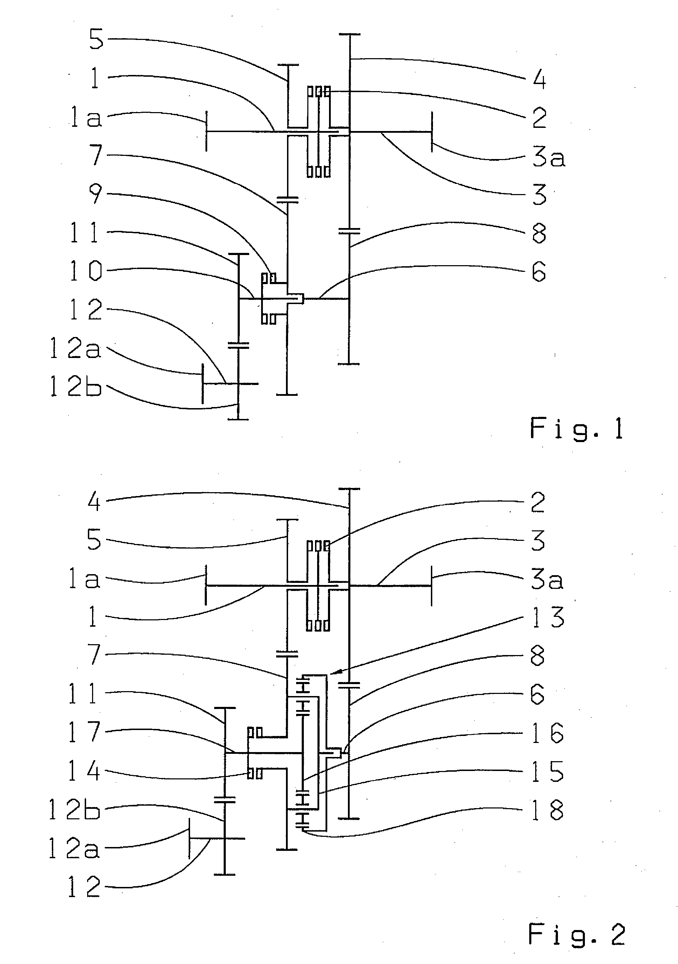

In den Figuren 1, 2, und 4 ist mit 1 eine Eingangswelle eines Verteilergetriebes bezeichnet, die von einem nicht näher bezeichneten Schaltgetriebe eines vorzugsweise als Nutzkraftfahrzeug ausgebildeten Fahrzeugs an einem Antriebsflansch 1 a, vorzugsweise über eine Gelenkwelle, angetrieben wird. Es kann sich natürlich bei dem Fahrzeug auch um ein landwirtschaftliches Trac-Fahrzeug oder um eine Baumaschine handeln. Auf der Eingangswelle 1 ist eine erste Schaltkupplung 2 angeordnet, über welche die Eingangswelle 1 wahlweise mit einem drehfest auf einer ersten Ausgangswelle 3 angeordneten ersten Abtriebsrad 4 oder einem auf der Eingangswelle 1 frei drehbaren ersten Antriebsrad 5 kuppelbar ist.

Sofern das erste Abtriebsrad 4 und die Eingangswelle 1 über die erste Schaltkupplung 2 aneinander gekuppelt sind, erfolgt von der Eingangswelle 1 aus ein direkter Durchtrieb auf die erste Ausgangswelle 3, die über einen Abtriebsflansch 3a und vorzugsweise über eine nicht dargestellte Gelenkwelle mit einer ständig angetriebenen Hinterachse des Fahrzeugs verbunden ist. Zu der Eingangswelle 1 und zur ersten Ausgangswelle 3 ist eine Zwischenwelle 6 im Vorgelege angeordnet. Bestandteil dieses Vorgeleges sind neben der Zwischenwelle 6 ein erstes Zahnrad 7, das mit dem ersten Antriebsrad 5 im Eingriff ist, und ein zweites Zahnrad 8, das mit dem ersten Abtriebsrad 4 kämmt.

Bei der Ausbildung des Verteilergetriebes nach Fig. 1 sind das erste Zahnrad 7 und das zweite Zahnrad 8 unmittelbar fest mit der Zwischenwelle 6 verbunden. Im zuvor beschriebenen direkten Durchtrieb wird die Hinterachse des Fahrzeugs in einem Drehzahlbereich angetrieben, der einem Betrieb des Fahrzeuges in einer Straßengruppe der im Schaltgetriebe schaltbaren Gangstufen entspricht. Ein über die erste Schaltkupplung 2 wählbarer untersetzter Bereich, in welchem die Eingangswelle 1 die erste Ausgangswelle 3 über das erste Antriebsrad 5, das erste Zahnrad 7, die Zwischenwelle 6, das zweite Zahnrad 8 und das erste Abtriebsrad 4 antreibt, entspricht einer Geländegruppe. In dieser Geländegruppe kann auch eine nicht näher dargestellte Antriebsachse, bei der es sich um eine Vorderachse handeln kann, von der Zwischenwelle 6 aus angetrieben werden. Zur selektiven Zu-oder Abschaltung dieses Antriebes dient eine zweite Schaltkupplung 9, die auf einem frei drehbar in der Zwischenwelle 6 geführten Wellenstummel 10 angeordnet ist und diesen mit dem ersten Zahnrad 7 kuppeln kann. Der Wellenstummel 10 nimmt ein drehfest auf ihm angeordnetes zweites Antriebsrad 11 auf, das mit einem auf einer zweiten Ausgangswelle 12 ebenfalls drehfesten zweiten Abtriebsrad 12b im Eingriff ist. Diese zweite Ausgangswelle 12 steht über einen Abtriebsflansch 12a mit einer zu einem Achsantrieb der Vorderachse führenden Gelenkwelle in Verbindung.

Die Ausbildung des Verteilergetriebes nach der Fig. 2 stimmt vom grundsätzlichen Aufbau her mit der nach Fig. 1 überein. Dabei ist aber innerhalb der Zwischenwelle ein als Stirnradplanetensatz ausgebildetes Differenzialgetriebe 13 angeordnet, das in der geschalteten Geländegruppe und damit im Allradbetrieb als Längsdifferenzial zwischen Hinterachse und Vorderachse dient. Dafür entfällt bei dieser Lösung die zweite Schaltkupplung, d.h., die zweite Radachse wird in der Geländegruppe permanent angetrieben. An Stelle der zweiten Schaltkupplung ist eine Sperrkupplung 14 vorgesehen, mittels der ein Steg 15 mit einem Sonnenrad 16 verbindbar ist. Dieses Sonnenrad 16 steht über eine zweite Antriebswelle 17 mit dem zweiten Antriebsrad 11 in Verbindung, welches in Übereinstimmung mit Fig. 1 das auf der zweiten Ausgangswelle 12 angeordnete Abtriebsrad 12b antreibt. Ein Hohlrad 18 ist mit dem zweiten Zahnrad 8 des Vorgeleges verbunden.

Es ist erkennbar, dass die Lösung nach Fig. 2 trotz der Verwendung eines Differenzialgetriebes nahezu identisch ist mit der Lösung nach Fig. 1. Es handelt sich daher grundsätzlich um eine Getriebeausbildung, die sich je nach Bedarf ohne entscheidende konstruktive Änderungen auf einfache Weise an die jeweiligen Bedürfnisse anpassen lässt.

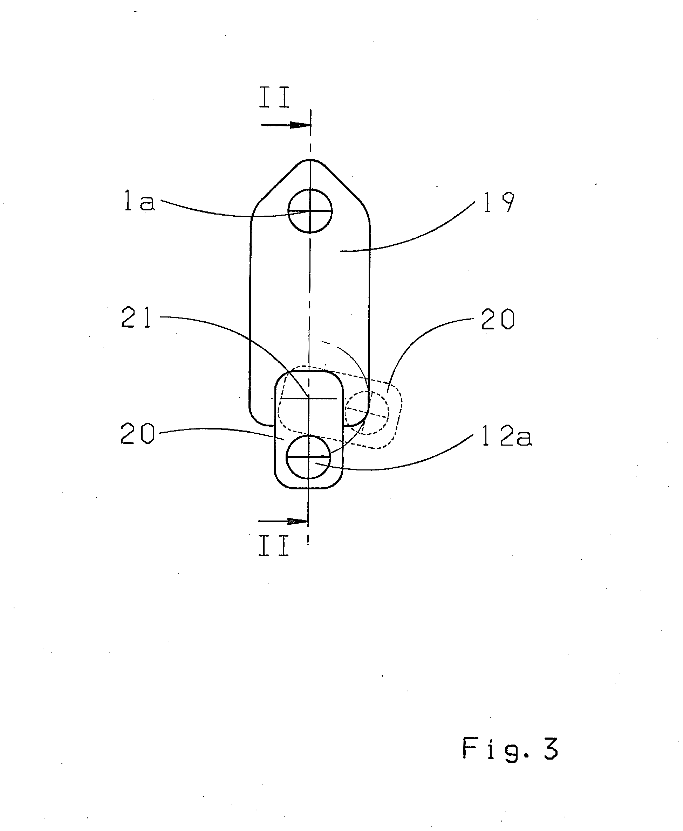

In der Fig. 3 ist eine stirnseitige Ansicht eines gemäß dem Schema nach Fig. 2 ausgebildeten Verteilergetriebe dargestellt. Die Getriebeelemente sind dabei von einem Verteilergetriebegehäuse 19 und einem gegenüber diesem schwenkbaren Gehäuse 20 umschlossen. Im oberen Bereich des Verteilergetriebegehäuses 19 ist der Antriebsflansch 1 a erkennbar, im unteren Bereich des Gehäuses 20 der mit der Vorderachse über eine Gelenkwelle verbundene Abtriebsflansch 12a. Eine zentral durch die Zwischenwelle verlaufende Drehachse 21 ist durch sich kreuzende strichpunktierte Linien bezeichnet. Um diese Drehachse 21 kann das Gehäuse 20 gegenüber dem Verteilergetriebegehäuse 19 geschwenkt werden, wobei beide Gehäuse 19 und 20 in unterschiedlichen Positionen zueinander befestigt werden können. Eine geänderte Lage ist durch eine gestrichelte Linie verdeutlicht. Damit besteht die Möglichkeit, die Lage des Abtriebsflansches 12a derart zu optimieren, dass ein großer Beugewinkel der Gelenkwelle vermieden und diese am Schaltgetriebe und am Verbrennungsmotor vorbeigeführt werden kann. Ebenso entfällt damit die Notwendigkeit mehrerer Gehäusevarianten.

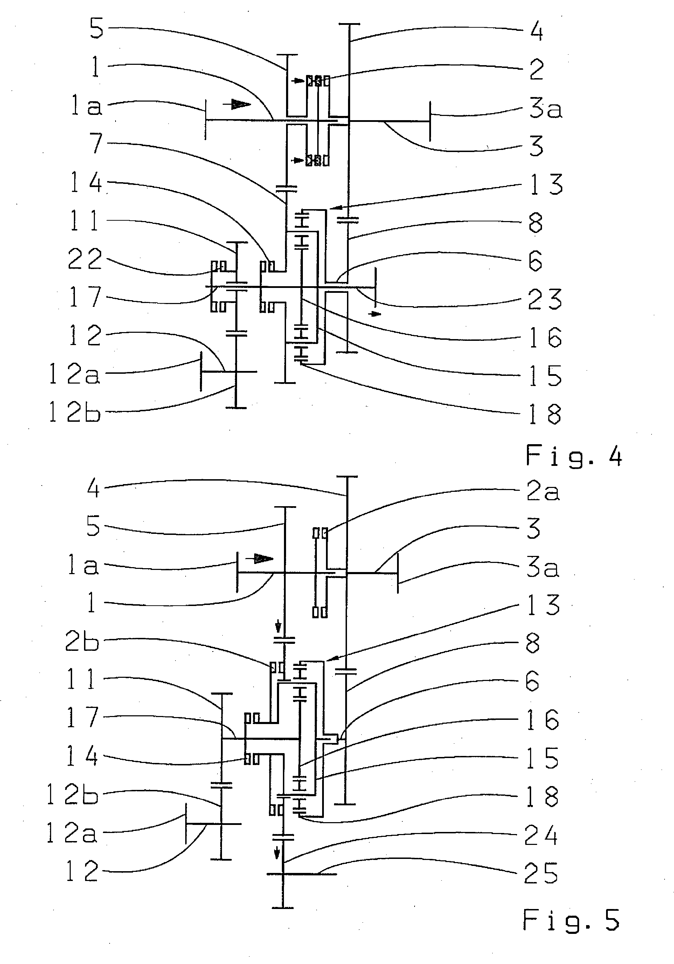

Die Fig. 4 und 5 zeigen Ausführungsbeispiele der Erfindung, die auf der Lösung nach den Fig. 1 und 2 basieren. Diese Anordnungen beinhalten ebenfalls ein zwischen dem ersten Zahnrad 7 und dem zweiten Zahnrad 8 angeordnetes Differenzialgetriebe 13. Die Glieder dieses Differenzialgetriebes 13, nämlich der Steg 15, das Sonnenrad 16 und das Hohlrad 18 sind in der gleichen Weise wie in Fig. 2 mit den Wellen verbunden.

Nach Fig. 4 ist das zweite Antriebsrad 11 allerdings mittels einer dritten Schaltkupplung 22 wahlweise mit der Antriebswelle 17 kuppel- oder entkuppelbar. Dabei geht weiterhin von dem Steg 15 eine Nebenabtriebswelle 23 ab, die durch das zweite Zahnrad 8 des Vorgeleges hindurchgeführt ist. Diese Nebenabtriebswelle 23, auch Zapfwelle genannt, dient zum Antrieb externer Geräte. Sie wird im Stillstand des Fahrzeuges, also bei festgebremster erster Ausgangswelle 3 und mit Übertragung des Drehmoments über die erste Schaltkupplung 2 auf das erste Zahnrad 7 sowie ausgerückten übrigen Kupplungen (Sperrkupplung 14 und dritter Schaltkupplung 22) realisiert. Das Hohlrad 18 stützt sich dabei über die entsprechenden Zahnräder 4 und 8 an der ersten Ausgangswelle 3 ab. Auf diese Weise lässt sich durch eine mit geringem Bauaufwand verbundene Änderung des Verteilergetriebes ein Nebenabtrieb realisieren.

Schließlich zeigt die Fig. 5 eine alternative Lösung, mit der ebenfalls ein Nebenabtrieb geschaffen wird. In diesem Fall werden eine erste Schaltkupplung 2a und eine dritte Schaltkupplung 2b zwischen der Eingangswelle 1 und der ersten Ausgangswelle 3 sowie zwischen dem ersten Zahnrad 7 und dem Steg 15 angeordnet. Dabei kämmt mit dem auf dem Steg 15 angeordneten ersten Zahnrad 7 ein drittes Zahnrad 24, welches auf einer Nebenabtriebswelle 25 befestigt ist. In diesem Fall kann bei sowohl bei gesperrtem als auch entsperrtem Differenzialgetriebe die Nebenabtriebswelle 24 angetrieben werden.

Dadurch ist es möglich, dass bei stehendem Fahrzeug der Nebenabtrieb drehen kann und der Nebenabtrieb räumlich flexibel angeordnet werden kann.

### Bezugszeichen

- 1: Eingangswelle
- 1a: Antriebsflansch
- 2, 2a: erste Schaltkupplung
- 2b: dritte Schaltkupplung
- 3: erste Ausgangswelle
- 3a: Abtriebsflansch
- 4: erstes Abtriebsrad
- 5: erstes Antriebsrad
- 6: Zwischenwelle
- 7: erstes Zahnrad
- 8: zweites Zahnrad
- 9: zweite Schaltkupplung
- 10: Wellenstummel
- 11: zweites Antriebsrad
- 12: zweite Ausgangswelle
- 12a: zweiter Abtriebsflansch
- 12b: zweites Abtriebsrad
- 13: Differenzialgetriebe
- 14: Sperrkupplung
- 15: Steg
- 16: Sonnenrad
- 17: zweite Antriebswelle
- 18: Hohlrad
- 19: Verteilergetriebegehäuse
- 20: Gehäuse
- 21: Drehachse
- 22: dritte Schaltkupplung
- 23: Nebenabtriebswelle
- 24: drittes Zahnrad
- 25: Nebenabtriebswelle

## Patentansprüche

1. Verteilergetriebe für einen Antrieb einer ständig angetriebenen ersten Radachse und zumindest einer weiteren zuschaltbaren Radachse eines Kraft-fahrzeuges mit einer von einem Schaltgetriebe antreibbaren Eingangswelle (1) und einer gleichachsig zu dieser verlaufenden ersten Ausgangswelle (3), die zum Antrieb der ständig angetriebenen Radachse dient, mit einer im Vorgelege zu der Eingangswelle (1) und der ersten Ausgangswelle (3) angeordneten Zwischenwelle (6) und mit einer von der Zwischenwelle (6) über ein Räderpaar (11, 12b) angetriebenen zweiten Ausgangswelle (12), die zum Antrieb der weiteren zuschaltbaren Radachse dient, wobei die erste Ausgangswelle (3) über eine erste Schaltkupplung (2) wahlweise mit einer Direktübertragung oder einer Untersetzung antreibbar ist, wobei die erste Schaltkupplung (2) unmittelbar auf der Eingangswelle (1) angeordnet ist und in einer ersten Schaltstellung zur Direktübertragung die Eingangswelle (1) direkt mit der ersten Ausgangswelle (3) oder einem auf dieser angeordneten ersten Abtriebsrad (4)verbindet und dass die erste Schaltkupplung (2) in einer zweiten Schaltstellung ein auf der Eingangswelle (1) frei drehbar gelagertes erstes Antriebsrad (5) mit der Eingangswelle (1) kuppelt und dabei die erste Ausgangswelle (3) über das auf der Zwischenwelle (6) ausgebildete Vorgelege antreibt, wodurch die erste Ausgangswelle (3) mit untersetzter Drehzahl antreibbar ist, **dadurch gekennzeichnet, dass** innerhalb der Zwischenwelle (6) ein Differenzialgetriebe (13) angeordnet ist, dessen Glieder (15, 16, 18) sowohl mit einem ersten (7) und einem zweiten Zahnrad (8) als auch mit einem zweiten Antriebsrad (11) verbunden sind, wobei das zweite Antriebsrad (11) mit einem auf der zweiten Ausgangswelle (12) angeordneten zweiten Abtriebsrad (12b) im Eingriff ist..

2. Verteilergetriebe für einen Antrieb einer ständig angetriebenen ersten Radachse und zumindest einer weiteren zuschaltbaren Radachse eines Kraft-fahrzeuges mit einer von einem Schaltgetriebe antreibbaren Eingangswelle (1) und einer gleichachsig zu dieser verlaufenden ersten Ausgangswelle (3), die zum Antrieb der ständig angetriebenen Radachse dient, mit einer im Vorgelege zu der Eingangswelle (1) und der ersten Ausgangswelle (3) angeordneten Zwischenwelle (6) und mit einer von der Zwischenwelle (6) über ein Räderpaar (11, 12b) angetriebenen zweiten Ausgangswelle (12), die zum Antrieb der weiteren zuschaltbaren Radachse dient, wobei die erste Ausgangswelle (3) über eine erste Schaltkupplung (2a) wahlweise mit einer Direktübertragung oder einer Untersetzung antreibbar ist, wobei die erste Schaltkupplung (2a) unmittelbar auf der Eingangswelle (1) angeordnet ist und in einer eingekuppelten Schaltstellung zur Direktübertragung die Eingangswelle (1) direkt mit der ersten Ausgangswelle (3) verbindet und dass ein erstes drehfest mit der Eingangswelle (1) verbundenes Antriebsrad (5) mit einem ersten Zahnrad (7) im Eingriff ist, welches über eine dritte Schaltkupplung (2b) an die Zwischenwelle (6) oder an ein Glied (15) eines Differenzialgetriebes (13) kuppelbar ist, wobei die erste Ausgangswelle (3) über das auf der Zwischenwelle (6) ausgebildete Vorgelege mit untersetzter Drehzahl antreibbar ist, **dadurch gekennzeichnet, dass** innerhalb der Zwischenwelle (6) ein Differenzialgetriebe (13) angeordnet ist, dessen Glieder (15, 16, 18) sowohl mit einem ersten (7) und einem zweiten Zahnrad (8) als auch mit einem zweiten Antriebsrad (11) verbunden sind, wobei das zweite Antriebsrad (11) mit einem auf der zweiten Ausgangswelle (12) angeordneten zweiten Abtriebsrad (12b) im Eingriff ist.

3. Verteilergetriebe nach einem der Ansprüche 1 oder 2, **dadurch gekennzeichnet, dass** das Differenzialgetriebe (13) als Stirnradplanetentrieb ausgebildet ist, der räumlich zwischen dem ersten (7) und dem zweiten Zahnrad (8) angeordnet ist.

4. Verteilergetriebe nach Anspruch 3, **dadurch gekennzeichnet, dass** von den Gliedern des Stirnradplanetentriebes ein Steg (15) mit dem ersten Zahnrad (7), ein Hohlrad (18) mit dem zweiten Zahnrad (8) und ein Sonnenrad (16) mit dem zweiten Antriebsrad (11) verbunden sind.

5. Verteilergetriebe nach Anspruch 4, **dadurch gekennzeichnet, dass** zwischen dem Steg (15) und dem Sonnenrad (16) eine zur Sperrung des Differenzialgetriebes (13) dienende Sperrkupplung (14) angeordnet ist.

6. Verteilergetriebe nach Anspruch 5, **dadurch gekennzeichnet, dass** der Steg (15) mit einer durch das zweite Zahnrad (8) hindurchgeführten Nebenabtriebswelle (23) verbunden ist.

7. Verteilergetriebe nach Anspruch 6, **dadurch gekennzeichnet, dass** die Nebenabtriebswelle (23) bei festgebremstem Hohlrad (18) ein Drehmoment überträgt, wobei das erste Zahnrad (7) und das zweite Antriebsrad (11) vom Sonnenrad (16) entkuppelt sind.

## Claims

1. Transfer gear for a drive of a constantly driven first wheel axle and of at least one further connectable wheel axle of a motor vehicle with an input shaft (1) drivable by a gear-shift transmission and with a first output shaft (3) which runs coaxially with respect to the said input shaft and serves for driving the constantly driven wheel axle, with an intermediate shaft (6) arranged in the gearing to the input shaft (1) and the first output shaft (3), and with a second output shaft (12) which is driven by the intermediate shaft (6) via a pair of wheels (11, 12b) and serves for driving the further connectable wheel axle, the first output shaft (3) being drivable via a first shift clutch (2) selectively with direct transfer or with reduction, the first shift clutch (2) being arranged directly on the input shaft (1) and, in the first shift position for direct transfer, connecting the input shaft (1) directly to the first output shaft (3) or to a first driving wheel (4) arranged on the latter, and the first shift clutch (2), in a second shift position, coupling a first driving wheel (5), mounted freely rotatably on the input shaft (1), to the input shaft (1), at the same time driving the first output shaft (3) via the gearing formed on the intermediate shaft (6), with the result that the first output shaft (3) can be driven at a reduced rotational speed, **characterized in that** within the intermediate shaft (6) is arranged a differential gear (13), the members (15, 16, 18) of which are connected both to a first (7) and a second (8) gearwheel and to a second driving wheel (11), the second driving wheel (11) being in engagement with a second driving wheel (12b) arranged on the second output shaft (12).

2. Transfer gear for a drive of a constantly driven first wheel axle and at least one further connectable wheel axle of a motor vehicle with an input shaft (1) drivable by a gear-shift transmission and with a first output shaft (3) which runs coaxially with respect to the said input shaft and serves for driving the constantly driven wheel axle, with an intermediate shaft (6) arranged in the gearing to the input shaft (1) and the first output shaft (3), and with a second output shaft (12) which is driven by the intermediate shaft (6) via a pair of wheels (11, 12b) and serves for driving the further connectable wheel axle, the first output shaft (3) being drivable via a first shift clutch (2a) selectively with direct transfer or with reduction, the first shift clutch (2) being arranged directly on the input shaft (1) and, in a coupled shift position for direct transfer, connecting the input shaft (1) directly to the first output shaft (3), and a first driving wheel (5) connected fixedly in terms of rotation to the input shaft (1) being in engagement with a first gearwheel (7) which is couplable via a third shift clutch (2b) to the intermediate shaft (6) or to a member (15) of a differential gear (13), the first output shaft (3) being drivable at a reduced rotational speed via the gearing formed on the intermediate shaft (6), **characterized in that** within the intermediate shaft (6) is arranged a differential gear (13), the members (15, 16, 18) of which are connected both to a first (7) and a second (8) gearwheel and to a second driving wheel (11), the second driving wheel (11) being in engagement with a second driving wheel (12b) arranged on the second output shaft (12).

3. Transfer gear according to either one of Claims 1 and 2, **characterized in that** the differential gear (13) is designed as a spur-wheel planetary drive which is arranged spatially between the first (7) and the second (8) gearwheel.

4. Transfer gear according to Claim 3, **characterized in that**, of the members of the spur-wheel planetary drive, a bridge (15) is connected to the first gearwheel (7), a ring wheel (18) is connected to the second gearwheel (8) and a sun wheel (16) is connected to the second driving wheel (11).

5. Transfer gear according to Claim 4, **characterized in that** a locking clutch (14) serving for locking the differential gear (13) is arranged between the bridge (15) and the sun wheel (16).

6. Transfer gear according to Claim 5, **characterized in that** the bridge (15) is connected to a secondary driven shaft (23) led through the second gearwheel (8).

7. Transfer gear according to Claim 6, **characterized in that** the secondary driven shaft (23) transfers a torque when the ring wheel (18) is firmly braked, the first gearwheel (7) and the second driving wheel (11) being decoupled from the sun wheel (16).

## Revendications

1. Engrenage distributeur pour un entraînement en entrée d'un premier essieu de roue en permanence entraîné en entrée et d'au moins un autre essieu de roue connectable en sus d'un véhicule automobile avec un arbre d'entrée (1) pouvant être entraîné en entrée par une boîte de vitesses et un premier arbre de sortie (3) s'étendant sur le même essieu que ce dernier servant à l'entraînement en entrée de l'essieu de roue en permanence entraîné en entrée, avec un arbre intermédiaire disposé dans le réducteur de vitesse de l'arbre d'entrée (1) et du premier arbre de sortie (3) (6) et avec un deuxième arbre de sortie (12) entraîné en entrée par l'arbre intermédiaire (6) via une paire de roues (11, 12b) servant à l'entraînement en entrée de l'autre essieu de roue connectable en sus, le premier arbre de sortie (3) étant entraîné en entrée via une première boîte de vitesses (2), au choix avec une transmission directe ou une réduction, la première boîte de vitesses (2) étant directement disposée sur l'arbre d'entrée (1) et reliant l'arbre d'entrée (1) directement avec le premier arbre de sortie (3) ou une première roue menée (4) disposée sur celui-ci dans une première position de changement de vitesse par rapport à la transmission directe et que la première boîte de vitesses (2) embraye dans une deuxième position de changement de vitesse une première roue motrice (5) disposée de façon à pouvoir tourner librement sur l'arbre d'entrée (1) avec l'arbre d'entrée (1) et entraîne en l'occurrence en entrée le premier arbre de sortie (3) via le réducteur de vitesse réalisé sur l'arbre intermédiaire (6), faisant que le premier arbre de sortie (3) est entraîné en entrée à vitesse de rotation réduite, **caractérisé en ce qu'**un engrenage différentiel (13), dont les maillons (15, 16, 18) sont reliés tant à une première (7) et une deuxième roue dentée (8) qu'à une deuxième roue motrice (11), est disposé à l'intérieur de l'arbre intermédiaire (6), la deuxième roue motrice (11) étant en prise avec une deuxième roue menée (12b) disposée sur le deuxième arbre de sortie (12).

2. Engrenage distributeur pour un entraînement en entrée d'un premier essieu de roue en permanence entraîné en entrée et d'au moins un autre essieu de roue connectable en sus d'un véhicule automobile avec un arbre d'entrée (1) pouvant être entraîné en entrée par une boîte de vitesses et un premier arbre de sortie (3) s'étendant sur le même essieu que ce dernier servant à l'entraînement en entrée de l'essieu de roue en permanence entraîné en entrée, avec un arbre intermédiaire disposé dans le réducteur de vitesse de l'arbre d'entrée (1) et du premier arbre de sortie (3) (6) et avec un deuxième arbre de sortie (12) entraîné en entrée par l'arbre intermédiaire (6) via une paire de roues (11, 12b) servant à l'entraînement en entrée de l'autre essieu de roue connectable en sus, le premier arbre de sortie (3) étant entraîné en entrée via une première boîte de vitesses (2a) au choix avec une transmission directe ou une réduction, la première boîte de vitesses (2a) étant directement disposée sur l'arbre d'entrée (1) et reliant directement, dans une position de changement de vitesse couplée par rapport à la transmission directe, l'arbre d'entrée (1) avec le premier arbre de sortie (3) et qu'une première roue motrice (5) reliée solidairement en rotation avec l'arbre d'entrée (1) est en prise avec une première roue dentée (7) pouvant être couplée à l'arbre intermédiaire (6) ou à un maillon (15) d'un engrenage différentiel (13) via une troisième boîte de vitesses (2b), le premier arbre de sortie (3) étant entraîné en entrée à vitesse de rotation réduite via le réducteur de vitesse réalisé sur l'arbre intermédiaire (6), **caractérisé en ce qu'**un engrenage différentiel (13), dont les maillons (15, 16, 18) sont reliés tant à une première (7) et une deuxième roue dentée (8) qu'à une deuxième roue motrice (11), est disposé à l'intérieur de l'arbre intermédiaire (6), la deuxième roue motrice (11) étant en prise avec une deuxième roue menée (12b) disposée sur le deuxième arbre de sortie (12).

3. Engrenage distributeur selon l'une quelconque des revendications 1 ou 2, **caractérisé en ce que** l'engrenage différentiel (13) prend la forme d'un engrenage planétaire de roue avant disposé dans l'espace entre la première (7) et la deuxième roue dentée (8).

4. Engrenage distributeur selon la revendication 3, **caractérisé en ce que** parmi les maillons de l'engrenage planétaire de roue avant, un étai (15) est relié à la première roue dentée (7), une roue creuse (18) est reliée à la deuxième roue dentée (8) et une roue solaire (16) est reliée à la deuxième roue motrice (11) .

5. Engrenage distributeur selon la revendication 4, **caractérisé en ce qu'**un embrayage de blocage (14) servant au blocage de l'engrenage différentiel (13) est disposé entre l'étai (15) et la roue solaire (16).

6. Engrenage distributeur selon la revendication 5, **caractérisé en ce que** l'étai (15) est relié à un arbre d'entraînement en sortie secondaire (23) introduit à travers la deuxième roue dentée (8).

7. Engrenage distributeur selon la revendication 6, **caractérisé en ce que** l'arbre d'entraînement en sortie secondaire (23) transmet un couple de rotation en présence d'une roue creuse (18) freinée en permanence, la première roue dentée (7) et la deuxième roue motrice (11) étant découplées par rapport à la roue solaire (16).
